Europäisches Patentamt

(19) European Patent Office

Office européen des brevets

(11) Numéro de publication: **0 241 374**
**B1**

(12) **FASCICULE DE BREVET EUROPEEN**

(45) Date de publication du fascicule du brevet:
24.10.90

(51) Int. Cl.⁵: **G01S 3/78**

(21) Numéro de dépôt: 87400775.0

(22) Date de dépôt: 07.04.87

(54) Système optronique d'écartométrie assurant la discrimination spatiale et spectrale des sources lumineuses infrarouges.

(30) Priorité: 11.04.86 FR 8605243

(43) Date de publication de la demande:
14.10.87 Bulletin 87/42

(45) Mention de la délivrance du brevet:
24.10.90 Bulletin 90/43

(84) Etats contractants désignés:
DE GB IT

(56) Documents cités:
FR-A- 2 307 275
US-A- 3 174 045
US-A- 3 475 963

REVUE TECHNIQUE THOMSON-CSF,
vol. 2, no. 2, juin 1970, pages 263-282, Paris, FR; G.
COUDERC: "Ecartomètre infrarouge "Sémiramis"

(73) Titulaire: THOMSON-CSF, 51, Esplanade du Général de
Gaulle, F-92800 Puteaux(FR)

(72) Inventeur: Guerin, Bernard, THOMSON-CSF
SCPI 19, avenue de Messine, F-75008 Paris(FR)
Inventeur: Coateval, Gilbert, THOMSON-CSF
SCPI 19, avenue de Messine, F-75008 Paris(FR)
Inventeur: Cojan, Yves, THOMSON-CSF SCPI 19, avenue
de Messine, F-75008 Paris(FR)

(74) Mandataire: Trocellier, Roger et al, THOMSON-CSF
SCPI, F-92045 PARIS LA DEFENSE CEDEX 67(FR)

**Description**

La présente invention concerne un système optronique d'écartométrie qui assure une discrimination élevée aussi bien sur le plan spatial que spectral des sources lumineuses infrarouges. Par sources lumineuses on entend la source utile à détecter ainsi que les sources parasites, en particulier le soleil ; ces sources diffèrent par leur taille, leur intensité, leur répartition spectrale énergétique et ceci présente des difficultés pour la discrimination et la détection.

Il est connu de produire une sélection spatiale des sources en interposant sur le trajet optique une ou plusieurs grilles de modulation constituées à l'aide de fentes, ou par des transparences dans le cas de pistes optiques. La modulation est produite par le déplacement à vitesse uniforme de la grille selon une direction orthogonale à la barrette pour moduler le signal à la fréquence des fentes, ou selon le code correspondant, la détection électronique étant assurée par le détecteur et par des circuits de filtrage adapté ou de corrélation en aval. Les dimensions des éléments détecteurs et des transparences sont adaptées aux dimensions moyennes envisagées pour la tache lumineuse représentant la cible utile dans une plage d'éloignement prédéterminée. Un système de ce genre est décrit notamment dans le brevet FR-A 1 482 051.

Pour accroître encore la discrimination spatiale il est connu d'utiliser des pistes optiques où le profil rectiligne des transparences est modifié selon une ligne brisée formant des chevrons (brevet FR-A 2 145 827).

Pour assurer la discrimination spectrale, il est connu d'utiliser un filtrage optique de bande passante réduite et dont la fréquence centrale est adaptée à celle du rayonnement de la cible utile attendue. Une solution décrite dans le brevet FR-B 2 307 275 utilise un ensemble de deux filtres optiques, l'un correspondant au spectre de la cible à détecter et l'autre, à une bande spectrale extérieure à cette première bande ; en outre, l'objectif récepteur est organisé pour séparer le rayonnement incident selon deux trajets optiques et assurer la focalisation en des endroits différents décalés du diamètre de la tache lumineuse correspondant à la cible utile. Chacune des voies optiques comporte l'un des filtres.

Il est connu également d'effectuer un balayage linéaire uniaxe du champ instantané pour couvrir toute l'étendue désirée. La solution la plus simple consiste à utiliser un miroir pouvant tourner autour d'un axe ; des solutions plus complexes utilisent des couronnes de miroirs ou de dièdres (FR-A 2 477 349).

Le but de l'invention est d'utiliser en combinaison certaines de ces techniques pour améliorer la discrimination spatiale et spectrale des sources infrarouges.

De telles exigences apparaissent en particulier dans la conduite de tir d'un système de défense sol/air ou mer/air mettant en oeuvre un missile contre une cible aérienne et pouvant être un avion, un hélicoptère, ou même un missile assaillant. Après la localisation de la cible, ces systèmes prévoient généralement deux phases dans la conduite du missile vers la cible.

Une première phase, dite "phase de ralliement", correspond au délai nécessaire au missile venant d'être tiré pour se stabiliser sur la trajectoire optimale en direction de la cible. Pour réaliser ce ralliement, un équipement est nécessaire et l'importance du champ à couvrir durant cette phase, par exemple 10° sur 10°, impose en général un écartomètre optique pouvant travailler dans la bande spectrale prévue pour l'exploitation, par exemple, dans le domaine infrarouge. L'écartomètre permet alors de calculer les composantes de l'écart angulaire qui existe entre le missile tiré et la cible à atteindre vue depuis le poste de tir.

Une seconde phase, dite "phase de guidage" résulte ensuite après le ralliement correct du missile, cette phase dure jusqu'à l'impact du missile sur la cible et s'effectue dans un champ de guidage qui, vu depuis le poste de tir, est étroit, beaucoup plus restreint que le champ de ralliement, par exemple 1° sur 1°, et interne à ce dernier. En général le guidage s'effectue grâce à des moyens radar qui peuvent être secourus, le cas échéant, par des moyens optiques d'écartométrie qui sont de préférence les mêmes que ceux utilisés pour effectuer la phase de ralliement. L'utilisation de l'écartométre optique se fait lorsque le radar tombe en panne, ou bien si la détection radar n'est pas possible dans le cas notamment d'un vol à basse altitude du missile au-dessus du sol ou de la mer.

Un autre objet de l'invention est d'améliorer dans de tels systèmes optroniques sollicités durant la phase de ralliement, la discrimination spatiale et spectrale des sources infrarouges, afin d'autoriser un tir même si des sources parasites importantes, tels que le soleil ou ses reflets sur la mer, se trouvent dans le champ optique de l'écartomètre nécessaire au ralliement.

Les techniques de filtrage spatial antérieures évoquées précédemment conviennent bien lorsqu'il s'agit de discriminer des sources de taille angulaire différentes et assurent une bonne rejection des sources dont la taille n'est pas adaptée au filtrage spatial résultant des dimensions des grilles de modulation et des détecteurs. Ce filtrage perd toutefois rapidement de son efficacité si les tailles ou si les intensités des sources ne sont pas comparables. Ainsi les sources parasites très intenses, produisent un effet de saturation de la chaine de détection malgré leur taille généralement élevée. L'écartomètre infrarouge doit répondre à des exigences de fonctionnement qui sont, dans un premier mode, d'assurer le ralliement et permettre ensuite le guidage du missile pourvu d'un traceur lorsque les fonds du champ observé ne sont pas perturbés en infrarouge. Dans un second mode de fonctionnement, l'écartomètre doit assurer le ralliement du missile lorsque cette fois les fonds présentent des perturbations infrarouges, en particulier quand le soleil ou des réflexions parasites sont présents dans le champ.

Il est donc nécessaire pour un tel système de ne plus être gêné par des sources de tailles connues, situées à des distances différentes du point de vue quantité d'atmosphère traversée afin de pouvoir suivre la source utile.

Ainsi, à l'aide des perfectionnements envisagés selon l'invention, il est rendu possible d'assurer par l'écartomètre infrarouge le ralliement dans le deuxième mode de fonctionnement, c'est-à-dire en présence de parasites ou du soleil, la phase de guidage étant assurée ensuite par un radar dans un champ étroit.

Les contraintes du premier mode de fonctionnement sont déjà satisfaites en pratique dans les solutions actuelles qui comportent, un dispositif de filtrage spatial à l'aide d'une grille de modulation, d'un détecteur à barrette, de préamplificateurs et de circuits de filtrage adapté à la modulation de la grille.

Suivant l'invention il est proposé pour répondre aux contraintes du deuxième mode, d'aménager l'équipement en sorte de produire un filtrage spatial et spectral amélioré, avec commutation du filtrage spectral et commutation du filtrage électronique en aval du détec teur, les circuits électroniques étant compatibles avec les deux modes de fonctionnement.

Dans ce but il est proposé un système optique d'écartométrie angulaire dans lequel l'optique réceptrice focalise le rayonnement lumineux provenant du champ observé sur un dispositif détecteur réduit à une barrette d'éléments photodétecteurs, et qui est équipé de moyens de discrimination spatiale et spectrale des sources lumineuses infrarouges, les moyens de discrimination spatiale utilisant une grille de modulation à l'aide de zones transparentes séparées par des zones opaques, les moyens de discrimination spectrale utilisant un filtrage optique, le système comportant en outre des moyens de balayage de champ uniaxe selon une direction perpendiculaire à la barrette, et des circuits de traitement en aval du détecteur pour le filtrage de la fréquence de modulation des grilles. La discrimination spatiale est produite en coopération par le moyen de balayage de champ et par la grille qui est fixe et qui comporte les zones transparentes constituées par des lignes brisées en forme de chevrons. Suivant une réalisation préférentielle dans le cadre de l'application à la conduite de tir précitée, la barrette présente les éléments détecteurs répartis selon un pas variable multiple d'un pas élémentaire qui correspond au diamètre moyen de la source utile attendue. En outre, le moyen de discrimination spectrale est réalisé par un système de filtrage constitué de deux filtres optiques commutables en fonction des conditions de fonction nement présentés au moment de l'exploitation, un premier filtre passe-bande dans une bande spectrale étroite située sur le bord d'une bande d'absorption atmosphérique, de préférence aux alentours de 4,4 micromètres (l'expression abrégée microns sera utilisée dans ce qui suit), et un deuxième filtre de bande large, avantageusement dans la bande 3 à 5 microns. Les circuits électroniques en aval de ces détecteurs comportent pour chaque élément détecteur une commutation de filtre électronique selon les modes de fonctionnement à envisager avec un premier filtre centré sur la fréquence de modula tion due aux grilles et au balayage de champ et un deuxième filtre de bande large passe-bas, pour la détection rapprochée de la source utile.

L'invention a pour objet un système optique d'écartométrie angulaire selon la revendication 1.

Les particularités et avantages de l'invention apparaîtront dans la description qui suit donnée à titre d'exemple à l'aide des figures annexées qui représentent :

- figure 1 : un schéma simplifié d'un système optique d'écar tométrie conforme à l'invention ;
- figure 2 : un schéma partiel relatif à un mode de réalisation de la grille de modulation et du détecteur illustrant le fonction nement de la discrimination spatiale ;
- figure 3 : une courbe montrant la variation du spectre de fréquence d'une petite source ;
- figure 4 : la courbe de variation du spectre de fréquence d'une source étendue ;
- figure 5 : une courbe de variation de l'intensité spectrale rayonnée par un corps noir 1000 K 200 cm² ;
- figure 6 : un choix de gabarit pour le filtrage spectral dans le deuxième mode de fonctionnement ;
- figure 7 : un bloc-diagramme d'un système optique d'écartométrie conforme à l'invention ;
- figure 8 : un schéma de détail relatif à la partie opto mécanique du système.

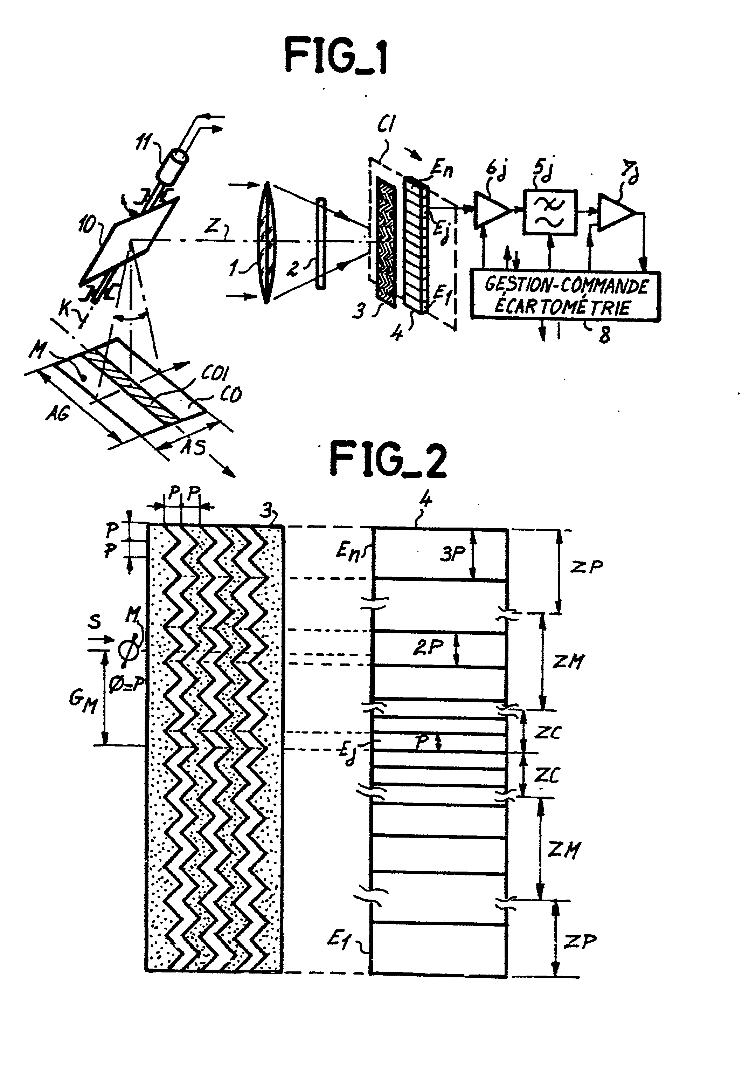

En se reportant au schéma simplifié figure 1, le système comporte les moyens principaux représentés par l'objectif de récep tion et de focalisation 1 suivi d'un filtre optique 2 pour effectuer le filtrage spectral dans la bande d'exploitation désirée ; viennent ensuite la grille modulatrice 3 précédant un dispositif détecteur 4 puis, en aval de ce dernier, les circuits électroniques de traitement des signaux détectés et de mesure d'écartométrie. Ces circuits comportent notamment un filtrage 5 adapté à la fréquence (ou au code de modulation) fourni par les grilles.

Dans l'équipement considéré, le dispositif détecteur photo électrique 4 est constitué par une barrette d'éléments photo sensibles, chaque élément $E_j$ étant suivi d'un circuit de préamplification $6_j$ à gain contrôlé puis du filtre correspondant $5_j$ et ensuite d'un circuit de comparaison $7_j$ à seuil ajustable ; la sortie du comparateur est envoyée à des circuits de gestion et de mesure d'écartométrie représentés par un ensemble 8. En outre, un dispositif de balayage de champ uniaxe est inclus dans le système pour explorer un champ total CO et pour produire la modulation, la grille 3 étant fixe. Ce dispositif comporte en sa réalisation la plus simple un miroir 10 que l'on fait pivoter autour d'un axe K incliné sur l'axe Z de l'optique ; la partie 11 symbolise un moteur et un capteur de recopie angulaire qui sont connectés à l'ensemble 8. En considérant que la direction de la barrette correspond à une étendue utile en gisement AG, le champ objet instantané COI a pour image le contour de la barrette dans le plan focal de l'objectif. La rotation angulaire du miroir dans un secteur donné va produire l'excursion en site AS et le défilement du champ image CI perpendiculairement à la barrette 4. Le miroir est animé d'un mouvement oscillant pour produire périodiquement le balayage de champ uniaxe et conjointement avec la grille fixe 3 la modulation.

La figure 2 a trait à l'ensemble grille 3 et barrette 4 pour illustrer le filtrage spatial. En effet, l'écartomètre a à traiter les sources différentes par leur taille, par leur intensité et encore par leur répartion spectrale énergétique. On considère que la source utile a un diamètre moyen (présenté dans une plage moyenne de distance, à partir d'une distance minimale d'éloignement) indiqué égal à P qui définit le pas de construction de la grille de modulation. Les sources parasites, généralement de grande taille peuvent ainsi être discriminées déjà à ce niveau, mais leur intensité importante et leur répartition spectrale étendue nécessitent des moyens complémentaires prévus au niveau du filtrage optique et au niveau du filtrage électronique comme on le verra ultérieurement. Il faut également considérer dans l'application prévue, que la source utile peut être très proche de l'écartomètre lors du ralliement où elle présente alors un diamètre très élevé au départ et allant en diminuant progressivement ; ceci nécessite l'obligation de discriminer la source utile des sources parasites de taille semblable ou comparable. En mode 1 de fonctionnement envisagé, seul le missile est présent dans le champ de l'appareil. La précision demandée étant importante en guidage, le filtrage spatial élaboré, provenant de la grille sélectionne les petites sources de diamètre P, P étant en général de diamètre inférieur ou égal à 3 milliradians. Le filtrage spatial est obtenu à l'aide de la grille 3 fixe combinée avec le déplacement du champ dû à l'entraînement du miroir 10. En effet, on se rend bien compte que la source M qui se trouve au gisement $G_M$ va voir son image se déplacer suivant la direction S des sites et va au passage traverser la grille et donc produire la modulation correspondant à la configuration des grilles.

La grille dans l'exemple figuré est constituée de trois pistes transparentes qui au lieu d'être rectilignes sont formées de de lignes brisées en chevrons.

La barrette est formée de $\underline{n}$ éléments $E_1$ à $E_n$ dont la dimension longitudinale correspond au pas P ou à une valeur multiple de ce pas. Dans l'exemple représenté adapté à l'utilisation envisagée, la barrette est conçue avec plusieurs zones, comportant pour chaque demi-barrette à partir de l'axe de symétrie de la barrette, une zone centrale d'étendue ZC avec des éléments de petite dimension longitudinale égale au pas P pour avoir la précision maximale dans la zone centrale, puis une zone médiane ZM où les éléments ont la dimension 2P pour avoir une précision moyenne et enfin une zone périphérique ZP où la dimension longitudinale est égale à 3P. Cette disposition avec un pas variable n'est donnée qu'à titre d'exemple non limitatif. En diminuant la dimension des éléments de la périphérie vers le centre on accélère le ralliement et on assure ensuite durant la phase de guidage une grande précision en travaillant dans la région centrale.

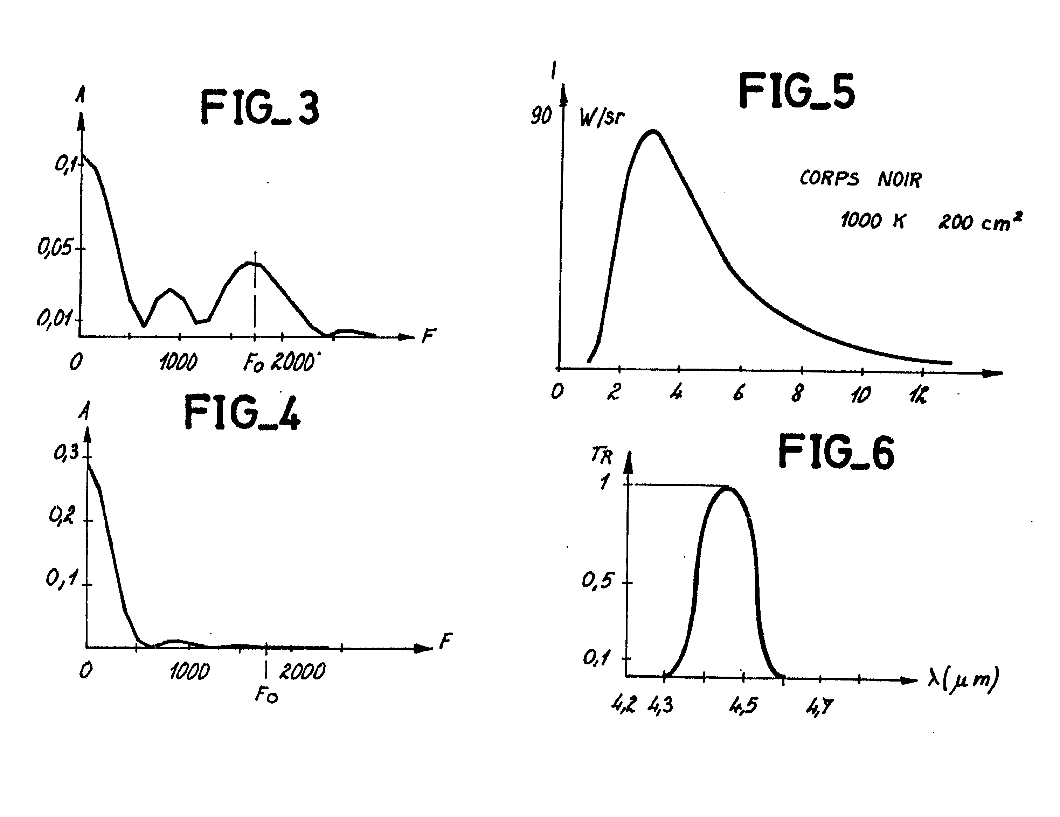

Ainsi qu'il a été dit précédemment, le circuit électronique en aval comporte un filtrage électronique adapté à la modulation du signal. En effet, les spectres de fréquence des signaux représentés sur les figures 3 et 4 respectivement pour la source utile et pour une source parasite étendue montrent que la source utile ou une source équivalente de petites dimensions présente un lobe isolé centré sur la fréquence $F_0$ de modulation qui est, dans l'exemple figuré, de l'ordre de 1700 Hz avec un lobe important en basse fréquence, tandis que les sources d'étendue angulaire importante selon la figure 4 possèdent essentiellement le spectre basse fréquence situé entre 0 et environ 600 Hz. Ainsi la discrimination s'effectue dans les filtres $5_j$ accordés sur la fréquence Fo de modulation. L'accord des filtres peut être réglable électroniquement par le circuit 8. Lorsque le missile lui-même présente un diamètre angulaire important, la figure 4 montre qu'il faut alors composer avec l'énergie basse fréquence du signal afin d'obtenir un signal électronique d'amplitude suffisante. Il est possible d'évaluer et de mesurer le coefficient de filtrage spatial associé à des sources de taille différente pour les deux modes de fonctionnement retenus. D'autres moyens de discrimination sont mis en jeu comme il va apparaître dans ce qui suit.

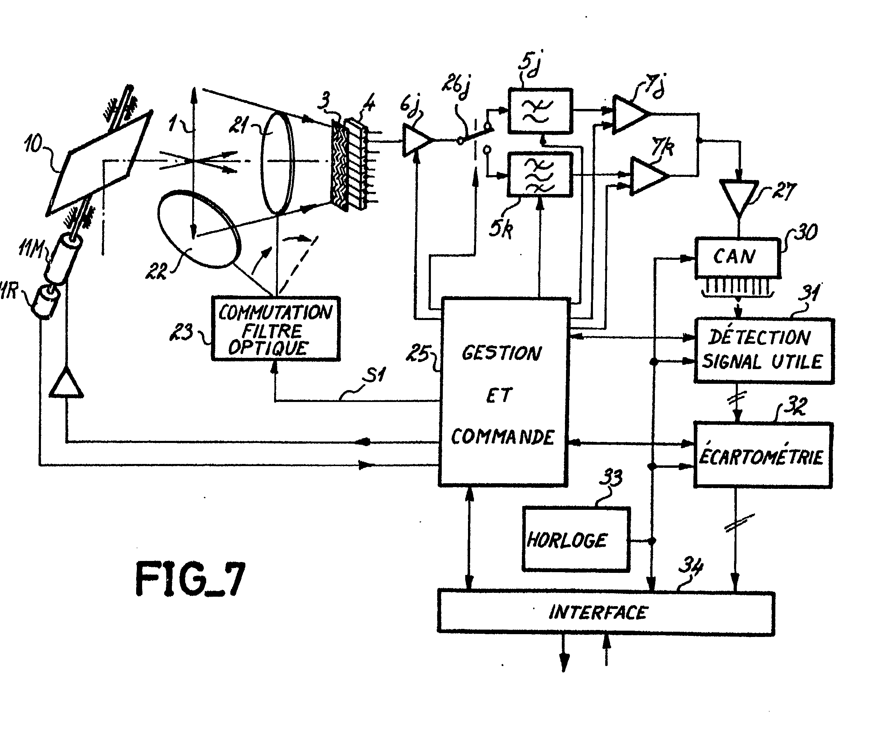

La figure 7 représente de manière plus détaillée le bloc diagramme d'un système optique d'écartométrie conforme à l'invention. Les éléments homologues à ceux de la figure 1 y sont représentés avec les mêmes numéros de référence. Le système comporte, en outre, des moyens de discrimination spectrale des sources formés par un dispositif de filtrage optique comprenant deux filtres, un premier filtre 21 de bande passante très étroite et centrée sur une fréquence du spectre de rayonnement émis par le missile, et un deuxième filtre 22 de bande passante beaucoup plus large qui s'étend de part et d'autre de la bande de filtre 21. Le filtre 21 à haute sélectivité assume plusieurs fonctions. Une première fonction est de protéger la barrette détectrice 4 durant les périodes de non fonctionnement. Une deuxième fonction est de permettre la détection des cibles utiles lors d'un fonctionnement en mode 2 c'est-à-dire en présence de perturbations parasites, notamment du soleil, dans le champ observé. Sa présence limite la portée mais évite de saturer le détecteur. Le filtre 22 à bande beaucoup plus large est lui destiné au ralliement en fonctionnement normal, en mode 1, c'est-à-dire en l'absence de perturbations. Le circuit 23 symbolise un dispositif de commande de commutation de ces filtres sur réception d'un signal de commande S1 produit par l'ensemble 25 de gestion et de commande.

Du côté des circuits électroniques, il est procédé également à une commutation du filtrage en aval du détecteur 4. Pour chaque élément détecteur il est prévu le filtre passe-bande $5_j$ déjà cité centré sur la fréquence $F_0$ de modulation ainsi qu'un deuxième filtre $5_k$ du type filtre passe-bas destiné à la détection du spectre basse fréquence des cibles lumineuses et donc a une utilisation au début de la phase de ralliement alors que les cibles utiles présentent une grande dimension. La commutation du trajet électronique en sortie du détecteur élémentaire s'effectue grâce à un dispositif commutateur 26 commandé automatiquement à partir du circuit de gestion 25. En aval de ces filtres électriques on trouve les comparateurs à seuil $7_j$ et $7_k$ respectivement pour ces deux voies de filtrage. Les sorties de ces comparateurs sont ensuite appliquées à l'entrée d'un amplificateur vidéo 27 lequel est suivi d'un circuit de conversion analogique-numérique 30 pour effectuer ensuite les traitements en numérique. Le circuit 30 est connecté à un circuit de détection du signal utile 31 suivi d'un circuit d'élaboration d'écartométrie 32. Un circuit horloge 33 fournit les synchronisations aux différents circuits et un circuit interface 34 assure les liaisons avec l'extérieur.

Le fonctionnement d'ensemble est donné dans ce qui suit. Avant le tir le filtre F21 est en place pour protéger le détecteur 4. Durant une phase préliminaire commandée automatiquement par le centre de gestion et de commande 25 sur réception d'un ordre extérieur, le filtre 21 est remplacé par le filtre optique à large bande 22, chaque circuit élémentaire étant connecté au filtre électronique passe-bande $5_j$. Les signaux détectés sont analysés, si le soleil est présent dans le champ ces signaux vont être très importants et dépasser un seuil maximal prédéterminé au-delà duquel l'ensemble 25 de gestion commande la mise en place du filtre F21 à bande étroite. Si par contre il n'y a pas de sources parasites telles que le seuil limite prédéterminé est atteint, le filtre large bande F22 reste en place. Le tir peut avoir lieu ensuite. Dans chacun de ces modes, le filtre électrique $5_k$ ou $5_j$ est imposé automatiquement par l'ensemble 25 de gestion en fonction du filtre optique retenu (F21 ou F22). Les seuils des comparateurs $7_j$, $7_k$ ainsi que les gains des préamplificateurs $6_j$ sont contrôlés automatiquement par l'ensemble 25.

La détermination du filtrage spectral est décrite à l'aide des figures 5 et 6. La répartition spectrale des sources utiles considérées comme des corps noirs de température de couleur de 1000 K pour le missile et 5900 K pour le soleil, ainsi que les valeurs absolues des intensités spectrales rayonnées sont telles que, quelle que soit la longueur d'onde, il apparaît une importante disparité des amplitudes. Il n'est donc pas envisageable de traiter électroniquement des signaux issus directement de telles dynamiques. On connaît également les valeurs des transmissions atmosphériques sur des trajets sol-sol en fonction de la distance, et sol-air en fonction de l'élévation de la visée par rapport à l'horizon. Une particularité de l'invention est de choisir une bande spectrale située sur le bord d'une bande d'absorption atmosphérique afin de limiter, en profitant de l'atténuation due à l'atmosphère, la dynamique des signaux et rendre possible l'exploitation. Il existe trois bandes principales d'absorption atmosphérique qui permettrait de se situer respectivement aux alentours de 2,8 microns, 4,4 microns ou 6,3 microns. Pour des raisons de dépendance importante vis-à-vis des conditions météorologiques, deux de ces bandes sont éliminées et la bande 4,4 microns est retenue, les filtres spectraux étant optimisés autour de cette valeur. L'analyse des répartitions spectrales du soleil et du missile ainsi que l'étude des transmissions spectrales atmosphériques montrent que le bord de la bande d'absorption du gaz carbonique aux environs de 4,4 microns répond aux problèmes de ralliement en présence de soleil (mode 2 de fonctionnement) et que la bande 3 à 5 microns répond aux problèmes de la poursuite de guidage sur fond non perturbé (mode 1 de fonctionnement). La figure 5 montre la variation d'intensité spectrale d'un corps noir 1000 K en fonction de la longueur d'onde et la figure 6 représente un exemple de gabarit du filtre 21 à bande étroite répondant aux caractéristiques sélectives désirées. Ce filtre est centré autour de 4,4 microns et sa bande passante est de l'ordre de 200 nanomètres.

Le filtre 22 a une bande passante qui comporte cette valeur de 4,4 microns et sa bande se situe par exemple de 3 à 5 microns pour l'application envisagée.

Pour assurer un bon fonctionnement l'optique 1 doit garantir une bonne transmission pour ces longueurs d'onde et sa bande sera choisie aussi large que possible et couvrant au moins l'intervalle 3 à 5 microns du filtre 22. Un tel choix permet de ne pas se pénaliser par une fabrication industrielle trop délicate de l'objectif optique.

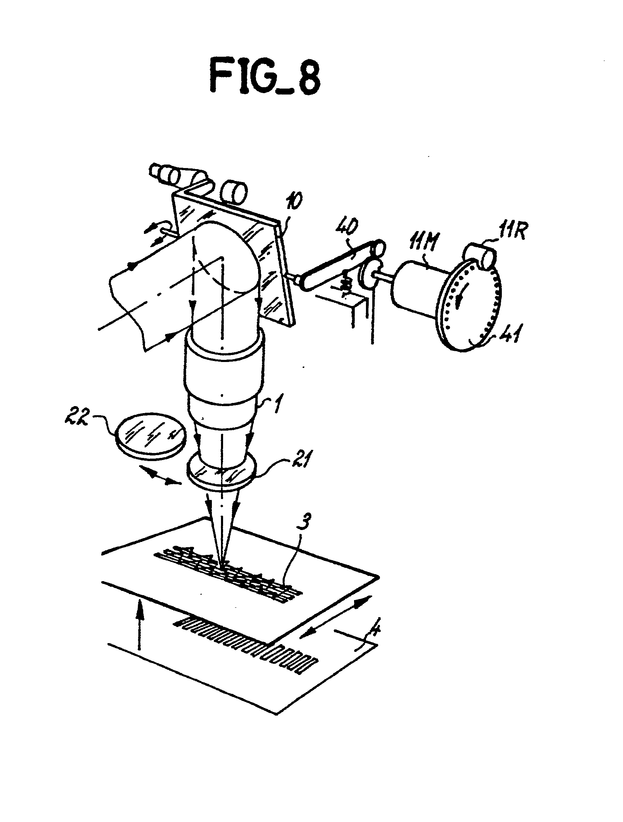

La figure 8 donne un exemple de réalisation de la partie optomécanique. Suivant cet exemple le moteur 11M entraîne une came qui par intermédiaire d'un galet de roulement va faire déplacer le bras de levier 40 de manière à faire tourner le miroir 10. La variation du mouvement est une dent de scie périodique. Le capteur de recopie 11R est également représenté avec un disque horloge 41. Le dispositif mécanique de commutation des filtres optiques 21, 22 n'est pas figuré.

Afin de satisfaire la détection des signaux à ces longueurs d'ondes, il est choisi par exemple un détecteur 4 à base de plomb sélénium dont le refroidissement est modéré. D'autres solutions sont possibles exigeant des températures plus basses de refroidissement. Le détecteur est réalisable selon une barrette de faibles dimensions. Avec un pas variable, la barrette permet d'accélérer le ralliement au centre du champ et la précision d'écartométrie est fonction de la zone de la barrette où se trouve la tache optique.

Le traitement électronique se décompose en deux fonctions qui s'enchaînent, d'abord un traitement analogique entre la sortie de la barrette et le circuit de conversion 30 avec des moyens de filtrage spatial adaptés à la fréquence de modulation, puis un traitement numérique qui assure, selon des techniques connues, l'élaboration des écartométries.

L'écartomètre peut être conçu formé d'un ensemble dans un coffret fermé afin d'être protégé de l'environnement, avec un hublot qui assure la pénétration du flux lumineux. Le matériau choisi pour le hublot doit convenir aux bandes spectrales retenues. L'optique peut être constituée de lentilles, par exemple au Germanium ou Fluorine, assurant la réception de ces bandes spectrales. Pour protéger la barrette 4, le filtre 21 de bande étroite reste disposé en place par le mécanisme de commande 23 avant le tir. Le circuit 25 assure la gestion des séquences et élabore les signaux internes de commande, il peut comporter avantageusement un ensemble microprocesseur. Ce circuit ainsi que ceux en aval de l'amplificateur 27 sont indiqués à titre d'exemple.

## Revendications

1. Système optique d'ecartométrie angulaire comportant, une voie optique, comprenant une optique de focalisation du rayonnement lumineux provenant du champ observé sur une barrette d'éléments détecteurs (Ej), et interposés entre ladite optique de focalisation et la barette, des moyens de discrimination spectrale des sources lumineuses infrarouges par filtrage optique dudit rayonnement et des moyens de discrimination spatiale des sources lumineuses infrarouges combinant une grille de modulation constituée de zone transparentes séparées par des zones opaques; un moyen de déplacement relatif de la grille par rapport à l'image de champ formée sur la barrette pour produire ladite modulation, et un circuit de traitement des signaux détectés par la barrette avec un dispositif de filtrage électronique adapté à ladité modulation, la grille (3) étant fixe et le moyen de déplacement relatif étant constitué par un dispositif (10, 11) de balayage de champ uniaxe selon une direction perpendiculaire à la barrette (4); ledit système étant caractérisé en ce que le dispositif de filtrage électronique comprend un premier moyen de filtrage électronique (5j) centré sur ladite modulation, un deuxième moyen de filtrage électronique (5k) pour détecter le spectre basse-fréquence présent dans les signaux détectés lors d'une phase de railliement de cible, et un moyen (26j) de commutation desdits moyens de filtrage électronique; et en ce que les moyens de discrimination spectrale comportent deux filtres optiques, à savoir un premier filtre (21) à bande étroite assurant une haute sélectivité dans le domaine infrarouge exploité et un second filtre (22) à bande plus large englobant la bande étroite du premier filtre, et un moyen de commande mécanique (23) pour passer d'un filtre à l'autre et vice versa, et couplé au moyens de commutation (26j) pour apparier chacun des moyens de filtrage électronique avec un des filtres otiques.

2. Système selon la revendication 1, caractérisé en ce que lesdits moyens de filtrage électronique et ledit moyen de commutation (26j) comportant respectivement en aval de chaque élément détecteur (Ej) un premier filtre passe-bande (5j) assurant ledit premier filtrage et un deuxième filtre passe-bas (5k) assurant ledit deuxième filtrage ainsi qu'un circuit de commutation (26j) pour connecter ledit élément détecteur au premier ou au deuxième desdits filtres électroniques.

3. Système selon la revendiaction 1, caractérisé en ce que le moyen de commande mécanique (23) est agencé pour commuter ledit premier filtre optique à bande étroite (21) durant les périodes de non fonctionnement du système, pour assurer le protection de la barrette détectrice (4) et durant les périodes de fonctionnement avec présence de perturbations parasites importantes dans le champ d'observation, pour assurer la détection de cible; et pour commuter ledit deuxième filtre optique (22) à bande plus large durant le ralliement de la cible en fonctionnement normal en l'absence de perturbations.

4. Système selon la revendication 3, caractérisé en ce que la bande spectrale du premier filtre optique (21) est située vers un bord d'une bande d'absorption atmosphérique afin de limiter, en profitant de l'atténuation due à l'atmosphère, la dynamique des signaux.

5. Système selon la revendication 4, caractérisé en ce que le premier filtre optique (21) est centré autour de 4,4 microns avec une bande passante de quelques dixièmes de microns.

6. Système selon la revendication 5, caractérisé en ce que le deuxième filtre optique (22) a une bande passsante située entre 3 à 5 microns.

7. Système selon l'une quelconque des revendications précédentes, caractérisé en ce que la grille de modulation (3) est constituée de lignes brisées en forme de chevrons.

8. Système selon l'une quelconque des revendications précédentes, caractérisé en ce que les éléments détecteurs (E1 à En) ont une dimension selon l'axe longitudinal de la barrette égale à un pas P prédéterminé, ou à une valeur multiple de ce pas, ledit pas correspondant au diamètre de l'image de la cible utile à détecter.

9. Système selon la revedication 8, caractéerisé en ce que la barrette est conçue avec un pas variable.

10. Système selon la revendication 9, caractérisé en ce que le pas variable est réparti dans une pluralité de zones comportant, de manière symétrique à partir du centre de la barrette, une première zone (ZC) avec des éléments de petite dimension longitudinale correspondant au pas P pour avoir la précision maximale dans la zone centrale de dérection, puis une zone médiane (ZM) avec des éléments de dimension 2P pour avoir une précision moyenne, enfin une zone périphérique (ZP) où les éléments ont la dimension 3P.

## Patentansprüche

1. Optisches Winkelablagemeßsystem, das einen optischen Weg aufweist, mit einer Fokussieroptik, die die Lichtstrahlung, die vom beobachteten Feld ausgeht, auf einer Zeile von Detektorelementen (Ej) fokussiert, zwischen die Fokussieroptik und die Zeile eingefügte Mittel zur Spektraldiskriminierung der Infrarotlichtquellen mittels optischer Filterung der Strahlung und Mitteln zur räumlichen Trennung der Infrarotlichtquellen, worin ein Modulationsgitter, das aus lichtdurchlässigen Zonen, die durch lichtundurchlässige Zonen getrennt sind, aufgebaut ist, sowie ein Mittel zur Verschiebung relativ zum Gitter in bezug auf das auf der Zeile erzeugte Bild des Feldes, um die Modulation zu erzeugen, und eine Schaltung zur Verarbeitung der von der Zeile erfaßten Signale kombiniert sind, die eine Einrichtung zur an die Modulation angepaßten elektronischen Filterung aufweist, wobei das Gitter (3) fest ist und das Mittel zur relativen Verschiebung durch eine Einrichtung (10, 11) zur einachsigen Feldabtastung in einer zur Zeile (4) senkrechten Richtung gebildet ist, dadurch gekennzeichnet, daß die Einrichtung zur elektronischen Filterung ein erstes Mittel zur elektronischen Filterung (5j), das bei der Modulation zentriert ist, ein zweites Mittel zur elektronischen Filterung (5k) zur Ermittlung des in den erfaßten Signalen vorliegenden niederfrequenten Spektrums während einer Zielanflugphase und ein Mittel (26j) zum Umschalten der elektronischen Filterungen umfaßt und daß die Mittel zur Spektraldiskriminierung zwei optische Filter, nämlich ein erstes Filter (21) mit schmalem Band, das im ausgewerteten Infrarotbereich eine hohe Selektivität gewährleistet, und ein zweites Filter (22) mit einem breiteren Band, das das schmale Band des ersten Filters umschließt, und ein mechanisches Steuermittel (23), um von einem Filter auf das andere überzugehen und umgekehrt, das mit dem Umschaltmittel (26j) gekoppelt ist, um jedes der Mittel zur elektronischen Filterung mit einem optischen Filter zu paaren, umfassen.

2. System gemäß Anspruch 1, dadurch gekennzeichnet, daß die Mittel zur elektronischen Filterung und das Umschaltmittel (26j) jeweils nach jedem Ermittlungselement (Ej) ein erstes Bandpaßfilter (5j), das die erste Filterung gewährleistet, und ein zweites Tiefpaßfilter (5k), das die zweite Filterung gewährleistet, sowie eine Umschaltschaltung (26j), mit der das Ermittlungselement mit dem ersten oder mit dem zweiten der elektronischen Filter verbunden wird, aufweisen.

3. System gemäß Anspruch 1, dadurch gekennzeichnet, daß das mechanische Steuermittel (23) dazu vorgesehen ist, das erste optische Filter mit schmalem Band (21) während der Perioden, in denen das System funktionslos ist, umzuschalten, um den Schutz der Detektorzeile (4) zu gewährleisten, und während der Perioden, in denen das System bei Vorhandensein von starken parasitären Störungen im Beobachtungsfeld arbeitet, umzuschalten, um die Zielerfassung zu gewährleisten, und um das zweite optische Filter (22) mit breiterem Band während des Zielanflugs im Normalbetrieb bei Abwesenheit von Störungen einzuschalten.

4. System gemäß Anspruch 3, dadurch gekennzeichnet, daß das Spektralband des ersten optischen Filters (21) am Rand eines atmosphärischen Absorptionsbandes angeordnet ist, um unter Ausnutzung der durch die Atmosphäre bewirkten Dämpfung die Signaldynamik zu begrenzen.

5. System gemäß Anspruch 4, dadurch gekennzeichnet, daß das erste optische Filter (21) mit einem Durchlaßbereich von einigen Zehntel Mikrometern um 4, 4 Mikrometer herum zentriert ist.

6. System gemäß, Anspruch 5, dadurch gekennzeichnet, daß das zweite optische Filter (22) einen zwischen 3 und 5 Mikrometern angeordneten Durchlaßbereich besitzt.

7. System gemäß einem der vorangehenden Ansprüche, dadurch gekennzeichnet, daß das Modulationsgitter (3) aus abgewinkelten Linien in Zickzack-Form ausgebildet ist.

8. System gemäß einem der vorangehenden Ansprüche, dadurch gekennzeichnet, daß die Detektionselemente (E1 - En) in Richtung der Längsachse der Zeile eine Abmessung besitzen, die einer vorgegebenen Strecke P oder einem Vielfachen dieser Strecke, die dem Durchmesser des zweckmäßig zu erfassenden Zielbildes entspricht, gleich ist.

9. System gemäß Anspruch 8, dadurch gekennzeichnet, daß die Zeile eine variable Strecke aufweist.

10. System gemäß Anspruch 9, dadurch gekennzeichnet, daß die variable Strecke auf eine Mehrzahl von Zonen verteilt ist, die symmetrisch vom Mittelpunkt der Zeile ausgehend eine erste Zone (ZC) mit Elementen von der Strecke P entsprechender, kleiner Abmessung in Längsrichtung für die maximale Genauigkeit in der zentralen Erfassungszone, dann eine mittlere Zone (ZM) mit Elementen der Abmessung 2P für eine mittlere Genauigkeit und schließlich eine Randzone (ZP), in denen die Elemente die Abmessung 3P besitzen, aufweisen.

## Claims

1. An optical system for angular range finding comprising an optical path including an optical means for focusing light radiation coming from the field under observation on a bar of detector elements (Ej), and, placed between the said optical means and the bar, means for spectral discrimination of infrared light sources by optical filtration of the said radiation, and means for spatial discrimination of the infrared light sources combining a modulation grid constituted by transparent zones separated by opaque zones; means for displacement of the grid in relation to the image of the field formed on the bar in order to produce the said modulation, and a circuit for the processing of the signals detected by the bar with electronic filtering adapted to the said modulation, said grid (3) being fixed and the relative displacement means being constituted by a uniaxial field sweep device (10 and 11) acting along a direction perpendicular to the bar (4), the said system being characterized in that the electronic filtering device comprises a first electronic filtering means (5j) centered on the said modulation, a second electronic filtering means (5k) in order to detect the low frequency spectrum present in the detected signals during a phase of homing on the target and a means (26j) of switching the said electronic filtering means and in that the spectral discriminating means comprise two optical filters, that is to say a filter (21) with a narrow band ensuring a high selectivity in the infrared range being used, and a second filter (22) with a broader band covering the narrow band of the first filter, and a mechanical control means (23) in order to change from one filter to the other and vice versa, and coupled to the switching means (26j) in order to couple each of the electronic filtering means with one of the optical filters.

2. The system as claimed in claim 1, characterized in that the said electronic filtering means and the said switching means (26j) comprise, respectively, on the output side of each detector element (Ej) a first pass band filter (5j) producing the said first filtering effect and a second low pass filter (5k) producing the second filtering effect and also a switching circuit (26j) in order to connect the said detector element with the first or the second of the said electronic filters.

3. The system as claimed in claim 1, chararterized in that the mechanical control means (23) is so arranged as to switch the first narrow band optical filter (21) during non-operational phases of the system in order to ensure protection of the detecting bar (4) and during the periods of operation with the presence of substantial parasitic disturbances in the field of observation in order to ensure the detection of the target, and to switch the said optical filter (22) with a broader band during homing on the target during normal operation in the absence of disturbance.

4. The system as claimed in claim 3, characterized in that the spectral band of the first optical filter (21) is situated near one edge of an atmospheric absorption band in order to limit, while exploiting attenuation due to the atmosphere, the dynamics of the signals.

5. The system as claimed in claim 4, characterized in that the first optical filter (21) is centered around 4.4 microns with a pass band of a few tenths of a micron.

6. The system as claimed in claim 5, characterized in that the second optical filter (22) has a pass band situated between 3 and 5 microns.

7. The system as claimed in any one of the preceding claims, characterized in that the modulation grid (3) is constituted by broken lines in the form of chevrons.

8. The system as claimed in any one of the preceding claims, characterized in that the detector elements (E1 through En) have a dimension along the longitudinal axis of the bar equal to a predetermined pitch P or to a value which is a multiple thereof, the said pitch corresponding to the diameter of the image of the working target to be detected.

9. The system as claimed in claim 8, characterized in that the bar is designed with a variable pitch.

10. The system as claimed in claim 9, characterized in that the variable pitch is distributed in a plurality of zones comprising, in a manner symmetrical with respect to the center of the bar, a first zone (ZC) with elements having a small longitudinal dimension corresponding to the pitch P in order to have the maximum precision in the central zone of detection, then a middle zone (ZM) with elements of the dimension 2P in order to have a medium precision and lastly a peripheral zone (ZP) wherein the elements have the dimension 3P.

# FIG_1

# FIG_2

FIG_3

FIG_4

FIG_5

CORPS NOIR

1000 K    200 cm²

FIG_6

EP 0 241 374 B1

FIG_7

EP 0 241 374 B1

# FIG_8